# EUROPEAN PATENT APPLICATION

(11) **EP 1 714 773 A1**
(43) Date of publication of application: **25.10.2006**
(21) Application number: 06252120.8
(22) Date of filing: 19.04.2006
(51) Int. Cl.: B29D 31/518, A43D 25/20, A43D 25/16, A43B 9/12, A43D 25/06, B29D 31/512

(54) **Application of film adhesive for post mold application**

(30) Priority: 19.04.2005 US 672725 P; 18.04.2006 US 406998
(71) Applicant: WORTHEN INDUSTRIES INC., Nashua, NH 03060 (US)
(72) Inventor: Strickland, Barbara, Hudson, NH 03051 (US)
(74) Representative: Ajello, Michael John

(57) **Abstract**

The method of preparing a sole assembly intended to be attached to a shoe upper and/or midsole. A coat of primer is applied to a molded shoe sole and then conditioned. A film adhesive is pressed on to the primer coated surface of the sole under pressure. The primer may be dried before applying the adhesive film. The sole is conditioned at 40-90°C for approximately 30-60 seconds and heat pressed at 40-90°C at 40-70 psi for 5-30 seconds.

## Description

### 1. Field of the Invention

This invention is directed to the application of a film adhesive to molded soles which are then bonded to uppers and/or midsoles to form shoes.

### 2. DESCRIPTION OF THE PRIOR ART

In the manufacture of footwear, several steps in the process require that surfaces be bound together by adhesives. Once the surfaces are adhered they may or may not be stitched depending upon the specific footwear construction. One component in footwear construction is the sole of the footwear. For certain types of footwear the soles are molded and after molding they are adhesively secured to an upper. The unit soles are usually injection or compression molded from thermoplastic materials, e.g. urethanes, polyvinyl chlorides, block copolymers (Kraton, SBS, SIS), polyolefins, etc.

In the footwear industry, there has been difficulty when applying a film adhesive on previously molded soles. The problem is two-fold, the difficulty of the application method in combination with the correct film to give specific adhesion to a variety of molded outsoles.

There are many different film adhesives available and which have been tried on molded soles. The most efficient application method is to apply the film in the molding operation, or very soon thereafter, before the sole compound is fully cured. When the adhesive is applied before the complete curing of the sole, the film becomes an integral part of the sole surface. Post-molding applications have been a problem because wetting of the compound surface of the sole after curing is difficult, even with heat levels high enough to make the film adhesive molten.

One prior art method of applying an adhesive to a sole in a mold is disclosed in 5,820,719. The method includes placing an adhesive film with a flexible release liner on one side thereof into a mold with the release liner facing away from the mold cavity. With the mold open the sole polymer is poured into the mold cavity, then the mold is closed allowing the polymer to expand against the adhesive film; or conversely, the mold is closed and the sole polymer is injection molded against the adhesive film, to form an assembly comprising an outer sole, a film of heat activatable adhesive molded into the sole and on the surface of the sole along with a release film over the adhesive.

### SUMMARY OF THE INVENTION

The method of forming a sole assembly including a molded sole, a thin coat of a primer and an adhesive film. The sole is conditioned prior to having the primer applied thereto and then the adhesive film is applied thereto. The primer may be dried before applying the adhesive film.

It is an object of the invention to form a sole assembly without the necessity of using a specific primer for each sole compound.

It is another object of the invention to form a sole assembly using mono- or co-extruded films that have been developed for specific adhesion to the soling compound.

It is still another object of the invention to form a sole assembly with increased shear resistance from previous methods of production.

Other features and advantages of the present invention will now be described in greater detail with reference to the accompanying drawings, wherein:

### BRIEF DESCRIPTION OF THE DRAWINGS

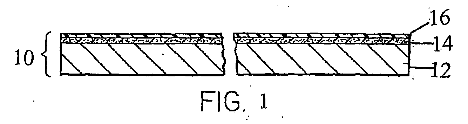

Fig. 1 is a side view of a molded shoe assembly in accordance with the invention disclosed herein.

### DETAILED DESCRIPTION OF THE INVENTION

As shown, Figure 1 is an illustration of a shoe assembly 10 in accordance to the invention described herein and includes a sole 12 having a thin coat of primer 14 and an adhesive 16. By using mono- or co- extruded films that have been developed for specific adhesion to the soling compound and by utilizing the process for application described herein, bond strengths have been achieved which are equal to or surpass previous bond strengths and shear properties of the standard solvent-based sole-attaching adhesives.

The adhesive films may be polyester, polyether, or polycaprolactone based polyurethanes, either alone or in combination with an olefin, such as EVA, or with PVC, SBR, or SBS additives or co-extrudates. The soling materials may be TPU (thermoplastic polyurethane), SBR (Styrene-butadiene rubber), NR (Nitrile rubber), EVA (ethylene vinyl acetate), SBS (Styrene-butadiene-styrene block copolymers), SIS (Styrene-isoprene-styrene copolymers), nylons, or blends thereof. The adhesive films are generally in the range of 2-8 mils total thickness, with an optimum thickness of 3 mils for a single film, 5-6 mils for a coextruded film.

A thin coat of less than 0.2 mils of a very low solids primer, typically 2-5% by weight polyurethane in acetone, is applied to the sole surface. The film adhesive may be applied to the sole while the primer still retains solvent (usually within 30 seconds). The soles are conditioned at 40-90°C for 30-60 seconds, then the film is pressed onto the sole at approximately 30-60 psi for 5-20 seconds, preferably at approximately 40psi for 10 seconds. Alternatively, the sole could be prepared with the primer as above without drying, and be combined in a heated press at 40-90°C at approximately 40-70 psi for 5-30 seconds, preferably at approximately 60psi for 10-15 seconds. Times and temperatures may vary based upon the sole compound and configuration; the critical element is that when the sole is removed from the press, the film has completely bonded to the sole.

After the prepared soles have returned to room temperature, or preferably aged for a minimum of 24 hours, they may be bonded to uppers and/or midsoles using conventional solvent-based or water-based polyurethanes. Prepared soles may also be bonded to midsoles that have previously had polyurethane films attached either in the mold or post-mold.

Previous methods of attaching films post-mold have involved using very specific primers for each individual sole compound, i.e., catalyzed PU for TPU and nitrile; chlorination for SBS, SBR, and SIS; UV primers for EVA; acids or phenols for nylon. The method disclosed herein, in combination with specific films, negates the use of special primers.

Both bond tests and wear tests have shown the resulting sole/upper adhesion to have superior shear resistance to standard liquid systems on TPU soles. This is most noticeable in rigid TPU cleated soles, as are used for soccer shoes.

Pull tests on both bonds and shoes have been completed in accordance with SATRA TM401, Peel Strength of Adhesive Bonds, and SATRA TM411, Peel Strength of Footwear Sole Bond and fall within industry standards.

It will be apparent to those skilled in the art that the present invention may be embodied in other specific forms without departing from the spirit or scope of the invention. Therefore, the present embodiment is to be considered as illustrative and not restrictive and the invention is not to be limited to the details given herein, but may be modified within the scope of the appended claims.

## Claims

1. The method of preparing a sole assembly intended to be attached to a shoe upper and/or midsole, said method comprising:
providing a molded shoe sole;
applying a coat of primer on one surface of the shoe sole and conditioning the coated sole;
pressing a film adhesive on to the primer coated surface of the sole under pressure.

2. The method of claim 1 wherein the primer is dried before applying the adhesive film.

3. The method of claim 1, wherein the sole is conditioned at 40-90°C for approximately 30-60 seconds.

4. The method of claim 1, wherein the shoe assembly is heat pressed at 40-90°C at 40-70 psi for 5-30 seconds.

5. The method of claim 1, wherein the adhesive film is selected from the group consisting essentially of polyester, polyether, or polycaprolactone based polyurethanes, either alone or in combination with a secondary polymer which may be an olefin.

6. The method of claim 1, wherein the sole is thermoplastic polyurethane, Styrene-butadiene rubber, Nitrile rubber, ethylene vinyl acetate, Styrene-butadiene-styrene block copolymers, Styrene-isoprene-styrene copolymers, nylons, or blends thereof.
